# EUROPEAN PATENT SPECIFICATION

(11) **EP 3 710 547 B1**
(45) Date of publication and mention of the grant of the patent: **21.05.2025**
(21) Application number: 18879157.8
(22) Date of filing: 16.11.2018
(51) Int. Cl.: C09D 123/08, B31C 7/02, B65D 3/06, C09J 7/35, C09J 123/08, D21H 19/84, C08K 3/34, C09D 109/08

(54) **HEAT-SEALABLE ARTICLE COATED WITH AN ETHYLENE/(METH)ACRYLIC ACID-COPOLYMER**
HEISSSIEGELBARER ARTIKEL, BESCHICHTET MIT EINEM ETHYLEN/(METH)ACRYLSÄURE-COPOLYMER
ARTICLE THERMOSCELLABLE RECOUVERT D'UN COPOLYMÈRE ÉTHYLÈNE/ACIDE (METH)ACRYLIQUE

(30) Priority: 17.11.2017 US 201762587590 P
(43) Date of publication of application: 23.09.2020
(73) Proprietor: Artemyn USA, LLC, Wilmington, DE 19808 (US)
(72) Inventor: MEIZANIS, Paul, Gray Georgia 31032 (US); PRATT, Gareth V., Cornwall Cornwall TR8 5SL (GB)
(74) Representative: Stevens Hewlett & Perkins
(86) International application number: PCT/US2018/061461
(87) International publication number: WO 2019/099787

(56) References cited:
- EP-A1- 2 719 825
- WO-A1-2016/170229
- US-A1- 2015 111 011
- US-A1- 2017 081 543
- US-A1- 2018 135 251
- US-B2- 8 932 725

## Description

### TECHNICAL FIELD

Embodiments of the present disclosure relate generally to articles comprising heat-seal coatings, and methods of making thereof.

### BACKGROUND

Various coatings are used to protect against degradation that can occur upon exposure to water or other moisture. For example, paper products used for packaging liquid or food often are coated with hydrophobic materials, such as polymers. However, polymeric coatings can provide insufficient protection. For example, coatings that are provided on only one surface, or that are not heat-sealed, may allow moisture to penetrate a container and compromise its strength or stability. Additionally, the process for applying coatings can lead to interactions between coated surfaces such that they adhere or stick together or "block" each other, thus interrupting manufacturing. Efficiency in manufacturing can be particularly important for high speed processes. Further, paper products coated with some types of polymeric materials, such as extruded polyethylene, or polyethylene terephthalate are poorly recyclable or repulpable, and thus are not environmentally friendly or cost-effective from a life cycle standpoint. Therefore, there is a need to develop coatings that address some or all of these considerations.
WO2016/170229A1 discloses a method for manufacturing coated paperboard suitable for packaging paperboard applications. EP2719825A1 discloses a paper material and a paper cup made therefrom, the coating having a middle coating and a barrier coating.
US2017/0081543A1 discloses a coating composition comprising a copolymer, preferably an ethylene/acrylic acid-copolymer, and at least one phyllosilicate.

### SUMMARY OF THE DISCLOSURE

The present disclosure includes articles with heat-seal coatings. As disclosed in claim 1, the present disclosure includes an article comprising at least one substrate having a first surface and a second surface; a first coating covering the first surface of the at least one substrate, the first coating comprising at least one layer that comprises a first polymer that is water-dispersible and a mineral; and at least one layer that comprises the first polymer without the mineral; and a second coating covering the second surface of the at least one substrate, the second coating comprising a second polymer; wherein at least one of the first polymer or the second polymer comprises a copolymer formed of at least two monomers, wherein the at least two monomers include ethylene and an unsaturated carboxylic acid monomer, and wherein the first coating is capable of forming a heat-seal with the second coating. In some cases, an outermost layer of one of the first coating or the second coating may comprise a mineral, and an outermost layer of the other of the first coating or the second coating may not contain a mineral. In at least one example, the at least one substrate of the article may comprise paper. Such article may have a repulpability of at least 85%

According to some aspects of the present disclosure, the mineral may comprise a phyllosilicate mineral. In some examples, the mineral may comprise talc, kaolin, mica, or a combination thereof.

According to some aspects of the present disclosure, the at least one of the first polymer or the second polymer may comprise a copolymer formed of at least two monomers. For example, the at least two monomers may include ethylene and an unsaturated carboxylic acid monomer. The unsaturated carboxylic acid monomer may be chosen from, e.g., acrylic acid and methacrylic acid. In some examples, the first polymer may be the same as the second polymer or a derivative thereof.

In some examples, the first coating may comprise from 10% to 80% of the first polymer, by weight of the first coating. The at least one layer of the first coating that comprises the first polymer without the mineral may be an outermost layer of the first coating. In some cases, the at least one of the first coating or the second coating may comprise at least one pre-coat layer comprising cellulose or a third polymer. The third polymer may comprise a styrene-containing copolymer, for example, or the third polymer may be the same as at least one of the first polymer or the second polymer. In at least one example, the at least one pre-coat layer may further comprise a mineral.

In some examples, the second coating may further comprise a mineral that is the same or different than the mineral of the first coating, and wherein a total amount of the mineral of the second coating is less than or equal to 80% of a total amount of the mineral of the first coating. In at least one example, the mineral of the second coating may comprise a phyllosilicate mineral.

According to some aspects of the present disclosure, the article may be a heat-sealed container, the first surface of the at least one substrate being an inner surface of the container, and the second surface of the at least one substrate being an outer surface of the container. In some cases, the article may be a heat-sealed container, the first surface of the at least one substrate being an outer surface of the container, and the second surface of the at least one substrate being an inner surface of the container. In some examples, the heat-sealed container may be configured to hold a liquid, a solid, or both a liquid and a solid at a temperature of less than 20°C.

Also disclosed herein are methods for making articles. For example, the method may comprise forming a first coating on a first surface of a substrate by applying a first aqueous dispersion comprising a first polymer and a mineral; and applying a second aqueous dispersion comprising the first polymer without the mineral; and forming a second coating on a second surface of the substrate by applying an aqueous dispersion comprising a second polymer that is the same or different than the first polymer; wherein the first coating is capable of forming a heat-seal with the second coating, and wherein at least one of the first polymer or the second polymer comprises a copolymer formed of at least two monomers, wherein the at least two monomers include ethylene and an unsaturated carboxylic acid monomer. In some cases, the method may further comprise heat-sealing a portion of the first coating to a portion of the second coating. The mineral in the first aqueous dispersion may comprise a phyllosilicate mineral. In some examples, the mineral may comprise talc, kaolin, mica, or a combination thereof. In at least one example, the substrate may comprise paper.

According to some aspects of the present disclosure, forming the first coating may comprise applying the first aqueous dispersion before applying the second aqueous dispersion. In some examples, forming the first coating may further comprise, before applying the first aqueous dispersion, applying a third aqueous dispersion comprising a third polymer different from the first polymer to form a pre-coat layer on the first surface. In some other examples, forming the second coating may further comprise applying an aqueous dispersion comprising a third polymer different from the second polymer to form a pre-coat layer on the second surface; wherein the aqueous dispersion comprising the second polymer is applied to the pre-coat layer. According to some aspects of the present disclosure, the third polymer may comprise a styrene-containing copolymer. In some cases, the first polymer may comprise a copolymer of ethylene and an unsaturated carboxylic acid.

### BRIEF DESCRIPTION OF DRAWINGS

Embodiments and various aspects of the present disclosure are illustrated in the following detailed description and the accompanying figures. Various features shown in the figures are not drawn to scale.
FIGS. 1A-1C show an exemplary cup with coatings in accordance with some aspects of the present disclosure. FIG. 1A shows a perspective view of the cup, FIG. 1B shows a cross-section of bottom and side parts of the cup with heat-sealed coatings, and FIG. 1C shows a cross-section of the cup side having heat-sealed coatings.
FIG. 2 illustrates exemplary layers of coatings in accordance with some aspects of the present disclosure.

### DETAILED DESCRIPTION

Particular aspects of the present disclosure are described in greater detail below. The terms and definitions provided herein control, if in conflict with terms and/or definitions incorporated by reference.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5% of a specified amount or value.

The present disclosure includes articles, e.g., paper products, coated with one or more materials to serve as a barrier to protect against bulk aqueous liquids and water condensation. The terms "coated" and "coating" as used herein are to be interpreted broadly and not limited, for example, to uniform coverage of a surface, or to covering an entire surface or surface area of a substrate. When a surface of a substrate comprises a coating, the surface may be fully or only partially covered by the coating. The coating(s) may provide a water barrier against hot and/or cold substances, e.g., hot and/or cold liquids, contained in the articles.

The articles herein comprise a substrate with first and second surfaces, e.g., which in some aspects of the present disclosure, may represent inner and outer surfaces (or vice versa) of the article. The article comprises a first coating covering the first surface of a substrate and a second coating covering the second surface of the substrate. The coating(s) on the first and second surfaces are capable of forming a heat-seal.

Also disclosed herein is a method of making such articles. The method comprises applying an aqueous and/or a non-aqueous dispersion both surfaces of a substrate to form one or more coatings on both sides of the substrate. The aqueous dispersions comprise one or more polymers with or without a mineral. The methods herein may further comprise heat sealing one or more surfaces of a substrate together.

Articles according to the present disclosure comprise at least one substrate having one or more coatings on each side. Each substrate may comprise one, two, three, four, five, or more surfaces that each includes a coating. For example, the substrate may have a first surface and a second surface opposite the first surface, wherein the entire first surface, the entire second surface, or portions thereof, are covered by respective coatings. In some aspects of the present disclosure, the article may comprise two or more substrates, which may be coupled together. For example, two or more substrates may be heat-sealed together via complementary coated surfaces to form an article.

The substrates herein may comprise cellulosic materials. Such cellulosic-based substrates may include paper. The term "paper" as used herein should be understood to mean all forms of paper, including board, such as paperboard products, white-lined board, linerboard, and cardboard. Paper may also include newsprint, uncoated groundwood, coated groundwood, coated free sheet, uncoated free sheet, packaging papers, industrial papers, corrugating medium, writing paper, typing paper, photo quality paper, or wallpaper. The cellulosic-based substrates may be formed from one or more webs, e.g., a single-layered or multi-layered paper web formed from a blend of fibers. Other types of substrates that may also be used include polymeric substrates, metal-based substrates, and textiles. Exemplary metal-based substrates include aluminum foil, metallized polymeric films, metallized paper, and AlOx or SiOx coated polymeric films. Exemplary polymeric substrates include polyethylene terepthalate, polylactic acid, polyhydroxyalkanoates, polyolefins such as biaxially oriented polyethylene terepthalate, polypropylene, biaxially oriented polypropylene, cast polypropylene, polyethylene, polyamides such as biaxially oriented polyamide and nylon, and polyvinyl chloride.

As mentioned above, the surfaces of the substrate comprise a coating fully covering or only partially covering the surfaces. Each of the coatings may comprise one or more layers of a material or a combination of materials. The article comprises a substrate and a coating comprising one or more layers that cover a first surface of the substrate. Additionally the article comprises another coating comprising one or more layers that cover a second surface of the substrate.

The coatings herein may serve as a water barrier, that is, a barrier against water and water-containing/aqueous substances, e.g., to protect the substrate from liquid or other moisture that could compromise the integrity of the substrate and/or the integrity of the article. The coatings are heat-sealable, for adhering various portions of the article together and/or to maintain a suitable water barrier along seams or junctures of the article. Materials suitable for the coatings herein include, but are not limited to, polymers (including copolymers, terpolymers, tetrapolymers, etc.), polysaccharide materials, and minerals.

Coatings according to the present disclosure may comprise a single polymer or a combination of polymers. In some examples, the coating may include at least one layer that does not include any polymeric material.

According to the present disclosure, one or more of the polymers is water-dispersible. That is, the water-dispersible polymers may be capable of being dispersed into water or other aqueous carrier, e.g., without the use of a dispersant such as a surfactant. Additionally or alternatively, the aqueous carrier may be added to water-dispersible polymers to form a stable dispersion. Such stable dispersion may have at least one-month shelf stability at room temperature. The water-dispersible polymers may include nonionic or anionic functionality that render them water-dispersible. In some cases, the water-dispersible polymers may also include water-soluble polymers. Exemplary water-dispersible polymers include styrene polymer (e.g., styrene-containing or styrene-based polymers such as styrene butadiene or styrene acrylic latex), polymers of ethylene monomer and an unsaturated carboxylic acid monomer (e.g., ethylene acrylic acid copolymer), polyethylene terephthalate, any derivatives thereof, any copolymers thereof, and any combinations thereof. In at least one example, the water-dispersible polymers comprise ethylene acrylic acid or a derivative thereof.

Other exemplary polymers that may be used in the coatings herein are polyetherimide and derivatives thereof, which may optionally be applied in substantially pure form or dispersed in a suitable solvent, such as an organic solvent, for application.

In some cases, the polymer(s) may be formed from more than one monomer, e.g., of two, three, four, or more different monomers. For example, the polymer may be a copolymer that comprises (is formed from) two different monomers. In another example, the polymer may be a terpolymer that comprises (is formed from) three different monomers. In another example, the polymer may be a tetrapolymer that comprises (is formed from) four different monomers. In some cases, the polymer may comprise an ionomer, e.g., a polymer comprising repeat units of both electrically neutral repeating units and a fraction of ionized units. **In** at least one example, the polymer comprises alkylene monomers and unsaturated acid monomers. Exemplary alkylene monomers include, but are not limited to, ethylene monomers (e.g., ethane), propylene monomers (e.g., propene), butylene monomers (e.g., butane), pentylene monomers (e.g., pentene), hexylene monomere (e.g., hexane), heptylene monomers (e.g., heptane), octylene monomers (e.g., heptene), styrene monomers, and combinations thereof. Exemplary unsaturated acid monomers include, but are not limited to, unsaturated carboxylic acids (such as acrylic acid monomers, methacrylic acid monomers, bromoacrylic acid monomers, ethyl acrylic acid monomers, propyl acrylic acid monomers, etc.), itaconic acid monomers, methyl hydrogen maleate monomers, maleic acid monomers, terephthalic acid monomers, ethylenically unsaturated acids, salts thereof, and combinations thereof. In the cases where the unsaturated acid monomers include salts of unsaturated acids, the salts may include salts derived from volatile alkali (such as, e.g., ammonia and amino methyl propanol), and carboxylic acid salts (e.g., carboxylic acid salt of potassium hydroxide). In at least one example, the polymer may comprise a styrene-containing or styrene-based polymer, such as styrene butadiene, or a derivative thereof.

Exemplary polymers that can be used herein include, but are not limited to, ethylene/acrylic acid copolymers, ethylene/methacrylic acid copolymers, ethylene/itaconic acid copolymers, ethylene/methyl hydrogen maleate copolymers, ethylene/maleic acid copolymers, ethylene/acrylic acid/methyl methacrylate terpolymers, ethylene/acrylic acid/ethyl acrylate terpolymers, ethylene/methacrylic acid/ethyl acrylate terpolymers, ethylene/itaconic acid/methyl methacrylate terpolymers, ethylene/methyl hydrogen maleate/ethyl acrylate terpolymers, ethylene/acrylic acid/vinyl acetate terpolymers, ethylene/methacrylic acid/vinyl acetate terpolymers, ethylene/acrylic acid/vinyl alcohol terpolymers, ethylene/propylene/acrylic acid terpolymers, ethylene/acrylamide/acrylic acid terpolymers, ethylene/styrene/acrylic acid terpolymers, ethylene/methacrylic acid/acrylonitrile terpolymers, ethylene/fumaric acid/vinyl methyl ether terpolymers, ethylene/vinyl chloride/acrylic acid terpolymers, ethylene/vinylidene chloride/acrylic acid terpolymers, polyethylene/acrylic acid graft copolymers, polyethylene/methacrylic acid graft copolymers, polymerized ethylene/propylene/acrylic acid graft terpolymers, and combinations thereof.

According to some aspects of the present disclosure, the coating(s) may comprise at least one copolymer of ethylene and an unsaturated carboxylic acid. The unsaturated carboxylic acid monomer(s) may comprise, for example, acrylic acid, methacrylic acid, or a combination thereof. The copolymer of ethylene and unsaturated carboxylic acid may comprise from 1% to 50% unsaturated carboxylic acid by weight, e.g. from 5% to 50%, from 5% to 30%, from 10% to 40%, or from 10% to 30% unsaturated carboxylic acid, by weight of the coating. In at least one example, the copolymer of ethylene and unsaturated carboxylic acid may comprise from 5% to 30% unsaturated carboxylic acid, by weight of the coating. In some examples, the polymers may be ethylene acrylic acid copolymers, e.g., copolymers comprising ethylene monomers (CH₂=CH₂) and acrylic acid monomers (CH₂=CH-CO₂H).

The polymers of the coatings herein may have a desired melting point, e.g., to provide for heat sealability and/or to facilitate manufacturing of the coatings. For example, coatings comprising the polymers may be heat sealed together when heated at or above the polymers' melting points. In some examples, the polymers may have a melting point ranging from 50°C to 200°C, e.g., from 70°C to 120°C, from 80°C to 100°C, from 120°C to 180°C, or from 140°C to 160°C. In at least one example, the polymer may have a melting point ranging from 70°C to 120°C.

The polymers of the coatings herein may comprise one or more acid groups. Some or all of the acid groups may be neutralized. For example, at least 20%, at least 40%, at least 60%, at least 80%, or at least 90% of the acid groups on the polymer may be neutralized. In some cases, from 10% to 100%, from 20% to 80%, from 30% to 70%, from 40% to 60%, from 30% to 50%, or from 50% to 70% of the acid groups on the polymer may be neutralized. The neutralization of the acid groups may assist water dispersion. In some examples, the acid groups may be over neutralized, e.g., the amount of neutralizing bases added to the polymers is above the stoichiometric quantity required for complete neutralization of the polymer.

The acid groups in the polymers may be neutralized by one or more neutralizing agents. Exemplary neutralizing agents include salts (e.g., ammonium salts or alkali metal salts such as sodium salts or potassium salts), organic amines, hydroxide salts (e.g., ammonium hydroxides or alkali metal hydroxides such as sodium hydroxide or potassium hydroxide). When ammonium hydroxide is used as the neutralizing agent, ammonia may be released on drying such that a minimal amount of salt is left in the coating. This may improve water resistance of the film. When alkali metal salts are used as the neutralizing agent, an ionomer may be formed with the polymer. This may improve the crystallinity of the film and the barrier properties of the coating.

The coatings herein may comprise from 0.1% to 100% by weight of polymer(s), with respect to the total weight of the respective coating. For example, the polymer(s) may be present in the coating (as one layer or in multiple layers) in an amount ranging from 10% to 80%, from 10% to 70%, from 10% to 60%, from 10% to 50%, or from 20% to 40% by weight of the coating. In some examples, the polymer(s) may be present in the coatings in an amount of less than 10% by weight, e.g., less than 5% by weight of the coating. In some examples, the polymers may be present in the coatings in an amount of greater than 80% by weight, e.g., greater than 90% or greater than 95%, by weight of the coating.

In addition to, or as an alternative of, polymers, the coatings herein may comprise one or more polysaccharide materials. For example, the coatings may comprise cellulose. In some cases, the cellulose may be fibrillated, e.g., microfibrillated or nanofibrillated. The coatings herein may comprise from 0.1% to 100% by weight of polysaccharide material(s), with respect to the total weight of the respective coating. For example, the polysaccharide material(s) may be present in the coating (as one layer or in multiple layers) in an amount ranging from 10% to 80%, from 10% to 70%, from 10% to 60%, from 10% to 50%, or from 20% to 40% by weight of the coating. In some examples, the polysaccharide material(s) may be present in the coating in an amount of less than 10%, e.g., less than 5% by weight of the coating. In some examples, the polysaccharide material(s) may be present in the coating in an amount of greater than 80% by weight, e.g., greater than 90% or greater than 95% by weight of the coating.

The coatings disclosed herein may comprise one or more minerals. In some examples, the mineral(s) may comprise or be derived from a natural or synthetic clay. In some examples, the mineral(s) may comprise a phyllosilicate mineral. The minerals may have a shape factor suitable for the coatings. As used herein, shape factor refers to a measure of an average value (on a weight average basis) of the ratio of mean particle diameter to particle thickness for a population of particles of varying size and shape. Shape factor may be measured using the electrical conductivity method and apparatus described in U.S. Patent No. 5,576,617. In this method, the electrical conductivity of a fully dispersed aqueous suspension of the particles is measured as they flow through an elongated tube. Measurements of the electrical conductivity are taken between (a) a pair of electrodes separated from one another along the longitudinal axis of the tube, and (b) a pair of electrodes separated from one another across the transverse width of the tube. The shape factor of the particulate material is determined from the difference between these two conductivity measurements. Higher shape factors generally describe more platy materials. The minerals may have a shape factor of at least 10, at least 20, at least 40, at least 60, at least 80, at least 90, at least 100, at least 125, at least 150, or at least 200. In some cases, the minerals may have a shape factor ranging from 10 to 200, e.g., from 20 to 200, from 20 to 100, from 40 to 100, from 50 to 80, from 50 to 60, or from 40 to 60.

Exemplary minerals that can be included in the coatings herein include, but are not limited to, kaolin, metakaolin, talc, mica, chlorite, pyrophyllite, serpentine, and combinations thereof. In some examples, a coating or a layer of a coating may comprise only one mineral, e.g., talc, kaolin, or mica. Alternatively, a coating or a layer of a coating may comprise a combination (e.g., a mixture) of two or more minerals. Different layers of a coating may comprise different minerals or combinations of minerals. For layers or coatings comprising mixtures of minerals, two or more minerals may be milled or ground together.

According to some aspects of the present disclosure, the coating(s) may comprise talc. The talc may be macrocrystalline talc, microcrystalline talc, or a combination thereof. The talc may be natural talc, synthetic talc, or a mixture thereof. Natural talc may comprise talc derived from a natural resource, e.g., natural talc deposits. Talc may comprise, for example, hydrated magnesium silicate of formula Si₄Mg₃O₁₀(OH)₂, e.g., arranged as a stack of laminae, and/or chlorite (hydrated magnesium aluminum silicate). Optionally, talc may be associated with other minerals, for example, dolomite.

According to some aspects of the present disclosure, the coating(s) may comprise kaolin and/or kaolinite. Kaolin may be used in a processed or unprocessed form, and may be derived from a natural source, e.g., a natural kaolin clay deposit. The kaolin may contain from 50% to 100% by weight of kaolinite (Al₂Si₂O₅(OH)₄), e.g., from 50% to 95%, from 50% to 90%, from 70% to 100%, from 70% to 90%, or from 80% to 100%, by weight of kaolinite.

The minerals herein may be processed or unprocessed. In some examples, the mineral(s) are not treated or processed, e.g., remaining in the form of the natural solid, prior to incorporation into the coating(s). In some aspects of the present disclosure, a mineral or combination of minerals may be processed prior to incorporation into the coating(s), e.g., by physical and/or chemical treatments. For example, the mineral(s) may be bleached, e.g., with a reductive bleaching agent such as sodium hydrosulfite. In some examples, the mineral(s) may be treated to remove impurities, e.g., by flocculation, flotation, or magnetic separation techniques. Further, for example, the mineral(s) may be calcined. In some cases, the mineral(s) may comprise calcined talc, calcined kaolin, or a combination thereof. In some cases, the mineral(s) may be partially calcined. For example, the mineral(s) may comprise partially calcined talc or partially calcined kaolin (e.g., metakaolin).

In some examples, the minerals may be processed by one or more comminution steps, e.g., grinding or milling. Light comminution of a coarse mineral may be used to give suitable delamination thereof. The comminution may use beads or granules of a plastic (e.g. nylon), sand or ceramic grinding or milling aid. The minerals may be treated by a known particle size classification procedure, e.g., screening and centrifuging (or both), to obtain particles having a desired particle size distribution.

The minerals may have a particle size distribution that is suitable for the coating(s). For example, the minerals may have a d₅₀ from 0.1 µm to 10 µm, e.g., from 0.5 µm to 7.5 µm, from 0.5 µm to 5 µm, from 1.0 to 3.5 µm, from greater than 2.0 to 3.5 µm, or from 2.2 to 3.5 µm The minerals may have a d₉₅ of less than 10 µm, e.g., less than 8 µm, less than 6 µm, or less than 5 µm. The minerals may have a d₉₈ of less than 20 µm, e.g., less than 15 µm, less than 10 µm, less than 8 µm, less than 6 µm, or less than 5 µm.

The particle size distribution of the minerals described herein may be measured by sedimentation of minerals in a fully dispersed condition in an aqueous medium using a Sedigraph 5100 machine as supplied by Micromeritics Instruments Corporation, Norcross, Ga., USA. Such a machine may provide measurements and a plot of the cumulative percentage by weight of particles having a size, referred to as the "equivalent spherical diameter" (e.s.d), less than given e.s.d values. The mean particle size d₅₀ is the value determined in this way of the particle e.s.d at which there are 50% by weight of the particles which have an equivalent spherical diameter less than that d₅₀ value. The d₉₅ and d₉₈ are the values determined in this way of the particle e.s.d. at which there are 95% and 98% respectively by weight of the particles which have an equivalent spherical diameter less than that d₉₅ or d₉₈ value.

The minerals may be present in the coatings in an amount ranging from 0.1% to 100%, e.g., from 10% to 90%, from 30% to 90%, from 40% to 90%, from 50% to 90%, or from 60% to 90% by weight of the dry components of the coating. In one example, the amount of minerals in the coatings may be 40% to 60% by weight of the dry components of the coating. In another example, the amount of minerals in the coatings may be 60% to 70% by weight of the dry components of the coating. In some examples, the amount of minerals present in the coatings may be less than 5%, e.g., less than 2%, less than 1%, or less than 0.1% by weight of the dry components of the coating.

The coatings may further comprise one or more additives, such as surfactants, adhesion promoters, diluents, cross-linkers, water retention aids, viscosity modifiers, thickeners, lubricity/calendaring aids, dispersants, wetting agents, antifoamers/defoamers, dry or wet pick improvement additives, dry or wet rub improvement and/or abrasion resistance additives, gloss-ink hold-out additives, optical brightening agents and/or fluorescent whitening agents, dyes, biocides/spoilage control agents, levelling and evening aids, grease and oil resistance additives, water resistance additives, pigments, and any combinations thereof.

Surfaces of the substrate may be covered by a coating comprising one or more layers of material(s). According to some aspects of the present disclosure, a surface of the substrate may be covered by a coating comprising 1, 2, 3, 4, 5, 6, 7, 8, 9, 10, or more layers. Some or all surfaces of the substrate may be partially or fully covered by a coating. In some examples, a substrate may have two surfaces, one surface covered by at least 2 or at least 3 coating layers and the other covered by at least 1 or at least 2 coating layers. In certain cases, one or more surfaces of the substrate are not covered by any coating.

A coating may comprise one or more layers continuously covering an article. Alternatively and additionally, a coating may comprise one or more layers discontinuously covering an article, e.g., providing partial or incomplete coverage of the surface. According to some aspects of the present disclosure, one or more layers of a coating may be devoid of minerals while other layers may comprise one or more minerals. In at least one example, the substrate may have a coating comprising one or more layers that does not comprise any mineral. In some examples, the coating(s) may comprise one or more layers that comprise one or more minerals. In some cases, the amount of mineral(s) in a coating or a layer of a coating may be from 0.1% to 100% by weight of the coating or layer, e.g., from 0.1% to 10%, from 1% to 20%, from 10% to 30%, from 20% to 40%, from 30% to 50%, from 40% to 60%, from 50% to 70%, from 60% to 80%, from 70% to 90%, or from 80% to 100% by weight of the total amount of the coating or the layer of the coating.

In some examples, a coating herein may comprise a first layer comprising a first polymer and a first mineral, and a second layer comprising a second polymer, which may be the same or different than the first polymer. In some cases, the second layer may comprise a second mineral, which may be the same or different than the first mineral. The amount of the second mineral in the second coating may be less than 90% by weight e.g., less than 80%, less than 60%, less than 40%, less than 20%, less than 10%, or less than 5%, or at least 20%, or at least 30%, or at least mire 40%, or at least 50%, by weight of the amount of the first mineral in the first coating. On at least one surface the second layer does not comprise a mineral. According to some aspects of the present disclosure, the first layer may be an inner layer and the second layer may be an outer layer (relative to the inner layer) on the same surface of a substrate.

Alternatively, the first and second layers are on different surfaces of a substrate. For example, in the cases where the article is a container, the first layer may be included in a coating on the inner surface, and the second layer may be included in a coating on the outer surface of the container, each optionally with an additional layer or layers.

The coatings herein may comprise one or more pre-coat layers. The pre-coat layer(s) may be between the substrate surface (including, e.g., adjacent to the substrate surface) and an outermost coating layer that forms a surface of the article. The pre-coat layer(s) may be continuous, e.g., wherein the pre-coat layers completely cover the substrate surface. Alternatively, the pre-coat layer(s) may be discontinuous, e.g., providing incomplete coverage of the substrate surface. In some examples, the article may comprise a pre-coat layer in direct contact with a substrate surface. In these cases, the pre-coat layer may lie on the surface. Alternatively or additionally, at least a portion of the pre-coat layer may penetrate a distance into the thickness of a substrate, e.g., into from 0.1% to 100%, e.g., from 10% to 50%, from 40% to 80%, from 50% to 90%, or from 60% to 100% of the thickness of the substrate.

The pre-coat layer(s) may comprise one or more polymers, which may be different from, or the same as, the material(s) in other layers of the coating. Additionally or alternatively, the pre-coat layer(s) may comprise one or more polysaccharide materials, such as cellulose. The pre-coat layer(s) may further comprise one or more minerals, which may be different from or the same as the minerals in other layers of the coating. In one example, the pre-coat layer may comprise a styrene polymer (e.g., styrene butadiene copolymer) and kaolin, e.g., 50% by weight of kaolin and 50% by weight of styrene butadiene, by weight of the pre-coat layer.

The coatings herein may have a desired dry coat weight, e.g., to provide a sufficient barrier. In some examples, the coatings may have a dry coat weight from 0.1 grams per square meter (g/m²) to 3.0 g/m², e.g., from 0.5 g/m² to 3.0 g/m², from 0.5 g/m²to 2.0 g/m², from 0.5 g/m² to 1.0 g/m², from 1.0 g/m² to 3.0 g/m², or from 1.0 g/m² to 2.0 g/m². In some cases, the coatings herein may have a dry coat weight of at least 0.1 g/m², at least 0.5 g/m², at least 1.0 g/m²; and up to 3.0 g/m² or 2.0 g/m² or 1.0 g/m² In some cases, the coatings herein may have a dry coat weight of about 0.5 g/m², about 0.8 g/m², about 1.0 g/m², about 1.2 g/m², about 1.4 g/m², about 1.6 g/m², about 1.8 g/m², about 2.0 g/m², about 2.2 g/m², about 2.4 g/m², about 2.6 g/m², about 2.8 g/m², or about 3.0 g/m². In other examples, the coatings may have a dry coat weight ranging from 1.0 g/m² to 10.0 g/m², e.g., from 1.0 g/m² to 9.0 g/m², from 3.0 g/m² to 8.0 g/m², from 3.0 g/m²to 6.0 g/m², from 5.0 g/m²to 8.0 g/m², or from 4.0 g/m² to 6.0 g/m². In some cases, the coatings herein may have a dry coat weight of at least 1.0 g/m² or at least 3.0 g/m² or at least 4.0 g/m² or at least 5.0 g/m²; and up to 6.0 g/m² or 8.0 g/m² or 9.0 g/m² or 10.0 g/m². In some examples, such coatings may cover at least a portion, e.g., the entirety, of a surface of a substrate. Different surfaces of a substrate may have different amounts of coatings (different dry coat weights).

The coatings herein may have a desired average thickness. For example, a coating may have a thickness ranging from 0.1 µm to 10.0 µm, e.g. from 1.0 µm to 10.0 µm, from 2.0 µm to 9.0 µm, from 4.0 µm to 8.0 µm, or from 5.0 µm to 7.0 µm.

The coatings may have characteristics that provide barriers, e.g., aqueous and/or gas barriers for the coated substrates. In these cases, the coatings may reduce or prevent the permeation of gases, vapors, and/or liquids through the coatings. For example, the coatings may reduce or prevent the permeation of an aqueous solution (e.g., water, water-based foods, water-based beverages) or moisture through the coatings.

The coatings herein may have a desired water absorption capability. The water absorption capability of the coatings may be measured by Cobb values, which may refer to the water absorption (in weight of water per unit area) of a sample. In some examples, the Cobb values of the coatings may be determined by the following procedure: 1) weigh a sample; 2) place the sample in a container; 3) fill the container with water; 4) wait for a period of time, e.g., about 30 minutes; 5) pour off water; and 6) weigh the sample. The Cobb value is then calculated by subtracting the initial weight of the sample from the final weight of the sample and then dividing by the area of the sample covered by the water. In some examples, the coatings may have a Cobb value of less than 30 g/m², less than 25 g/m², less than 20 g/m², less than 10 g/m², less than 5 g/m², or less than 2 g/m². In some cases, the Cobb value of the coatings may be measured according to the TAPPI T441 standard duration 1 minute.

According to some aspects of the present disclosure, the coatings may be configured to serve as an aqueous barrier within certain temperature ranges. For example, the coatings of the article may be configured to serve as a barrier against cold substances, e.g., at a temperature less than or equal to 20°C, such from -20°C to 20°C, from - 10°C to 20°C, from -10°C to 10°C, from -10°C to 5°C, from -10°C to 0°C, or from -5°C to 5°C. In such cases, the coatings may provide a suitable barrier against substances, e.g., liquids, solids, or liquids and solids, contained inside the article, as well as a suitable barrier against condensation that may collect on other surfaces of the article. Such coatings also may be suitable as barriers against room temperature, warm, and/or hot substances.

The coated substrates and articles comprising such coated substrates herein may be capable of being recycled. In the cases where the substrates comprise paper, the articles may be partially or fully repulped. In some examples, from 50% to 100%, e.g., from 60% to 100%, from 70% to 100%, from 80% to 100%, from 90% to 100%, from 85% to 95%, from 90% to about 99%, at least about 85%, at least about 87%, at least about 90%, at least about 95%, or at least 98% of the weight of an article disclosed herein may be recycled (e.g., repulped). The percentage of the article that can be recycled or repulped may be tested by methods described in Voluntary Standard For Repulping and Recycling Corrugated Fiberboard Treated to Improve Its Performance in the Presence of Water and Water Vapor (Rev. August 15, 2013) by the Fiber Box Association. In some examples, the percentage of the article that can be repulped may be measured using an AMC Maelstom repulper. In such cases, 110 grams of the article, cut into 1"×1" (2.54 x 2.54 cm) squares, may be added to the repulper containing 2895 grams of water (pH of 6.5±0.5, 50° C.), soaked for 15 minutes, and then repulped for 30 minutes. A 300 mL aliquot of the repulped slurry may then be screened through a Vibrating Flat Screen (0.006" - 15.2 mm - slot size). Rejects (caught by the screen) and fiber accepts may be collected, dried and weighed. The percentage of accepts may be calculated based on the weights of accepts and rejects, with 100% being complete repulpability.

The coatings and articles herein may be prepared by applying one or more aqueous dispersions to a substrate. For example, methods of making articles according to the present disclosure may comprise forming one or more coatings on one or more surfaces of a substrate, e.g., by applying an aqueous dispersion to each surface. The aqueous dispersion(s) may have different chemical compositions and be applied to one or more surfaces of the substrate to form one or more layers.

The minerals may be in aqueous suspensions before incorporation into the coatings. The aqueous dispersions may be prepared by combining (e.g., mixing) coating materials, e.g., polymers, minerals, and/or other additives with water or an aqueous medium. The aqueous dispersions may have a viscosity suitable to be applied by a coating machine. The viscosity of the aqueous dispersions may range from 100 centipoise (cP; 1cP = 1 mPa.s) to 2500 cP. from 100 cP to 500 cP, from 500 cP to 1000 cP, from 1000 cP to 2000 cP, or from 1500 cP to 2500 cP. In some examples, the viscosity of the aqueous dispersions may be Brookfield viscosity measured using an LV DV-E viscometer and spindle number 3, at 23° C and 100 rpm.

The aqueous dispersions may be suspensions or dispersions that comprise solid components. The aqueous dispersions may comprise solid components at an amount suitable for being applied by a coating machine. For example, the aqueous dispersions may comprise solid components ranging from 30% to 70%, from 35% to 65%, from 40% to 60%, or from 45% to 55% by weight of the total aqueous dispersion.

The aqueous or non-aqueous suspensions containing the minerals may have solids content ranging from 40% to 90%, from 50% to 80%, from 50% to 70%, from 60% to 70%, or from 50% to 60% by weight of the suspensions.

In some examples, the methods may comprise applying a first aqueous dispersion to form a first layer, a second aqueous dispersion to form a second layer, and a third dispersion to form a third layer. The first aqueous dispersion may be applied before the second aqueous dispersion. In these cases, when the first and second aqueous dispersions are applied to the same surface, the first aqueous dispersion may form an inner layer and the second aqueous dispersion may form an outer layer. In some cases, the third layer may be a pre-coat layer. In these cases, the third aqueous dispersion may be applied before the first and second aqueous dispersions on the same surface.

In some examples, the method for making articles according to the present disclosure may comprise one or more of the following steps: 1) forming a first coating on a first surface of a substrate by applying a first aqueous dispersion comprising a first polymer and a mineral, and applying a second aqueous dispersion comprising the first polymer without the mineral; and 2) forming a second coating on a second surface of the substrate by applying an aqueous dispersion comprising a second polymer. In these cases, forming the coating on the first surface may comprise applying a first aqueous dispersion comprising the first polymer and the mineral to form an inner layer; and applying to the inner layer a second aqueous dispersion comprising the first polymer without the mineral to form an outer layer. As used herein, an inner layer of a surface refers to a layer that is closer to the substrate surface compared to an outer layer of a coating. In some cases, forming the coating on the first surface may further comprise applying one or more pre-coat layer(s) before applying the first and second aqueous dispersions. The pre-coat layer(s) may be between the surface of the substrate and another layer (e.g., inner layer) of the coating. In some examples, the pre-coat layer(s) may comprise a polymer and a mineral.

The aqueous dispersions may be applied to the substrate by various techniques, for example, by spray coating, curtain coating, blade coating, coating with a roll coater or a gravure coater, brush coating, dipping, flexo coating, film coating, or rod coating. In some examples, the applied aqueous dispersions may be dried (e.g., by heat) to form solid coatings once applied to the substrate. In some cases, the aqueous dispersions may be applied to the substrate topically.

According to some aspects of the present disclosure, the process may be performed by a coating machine. Such coating machine may comprise an applicator for applying the aqueous dispersions described herein to a substrate and optionally a metering device for ensuring that a correct level of aqueous dispersions is applied. The coatings may be added by a coating head at a coating station. A coater that is applying coating on each side of the paper may have certain number of coating heads, depending on the number of coating layers applied on each side. Some coating heads coat only one side at a time. Other coating heads, e.g., those on roll coaters (e.g., film presses, gate rolls, and size presses) may be capable of coating two sides in one pass.

Exemplary coating machines that may be used for making the articles include air knife coaters, blade coaters, rod coaters, bar coaters, multi-head coaters, roll coaters, roll or blade coaters, cast coaters, laboratory coaters, gravure coaters, kisscoaters, liquid application systems, reverse roll coaters, curtain coaters, and spray coaters. In some examples, the aqueous dispersions may be applied to a substrate by printing, e.g., by offset printing, flexographic printing, or rotogravure printing. Such printing process may allow the coatings to be applied to specified areas on the substrate.

In some examples, the methods herein may comprise making containers using the articles (e.g., paper or other sheet materials) with the coatings disclosed herein. The containers may be made on automated manufacturing machines. For example, paper with the coatings herein may be used to make paper cups on high-speed cup converting lines. When processed on such machines, the coatings may inhibit or prevent blocking or interruption of the operation of the machine. The term "blocking" generally refers to when a coated substrate sticks to itself, to another substrate, to portions of equipment, and/or other surfaces, e.g., during manufacturing. Blocking may inhibit or even prevent production from proceeding. For example, blocking may cause coated paper or other coated substrates to roll up on itself and/or on parts of the machinery. For example, the coatings may result in little to no sticking to various parts of the machine. The present disclosure may provide for a configuration during manufacturing that prevents or otherwise minimizes blocking, e.g., adhesion to the machinery and/or other substrates. For example, the coated articles disclosed herein may advance through a papermaking/conversion/printing process in such a way that a surface of the coated article (e.g., the outermost surface) contacts surfaces of the machinery and/or another substrate without adhesion, or with only limited adhesion. The coated substrates herein may achieve a non-blocking effect while still providing sufficiently strong heat seal.

The methods of making the articles herein may comprise adhering a portion of a coating with a portion of another coating. The two coatings may be on different surfaces of the same substrate or on different substrates. In other cases, the methods may comprise adhering multiple portion of a coating. According to some aspects of the present disclosure, the adhering may be performed by heat-sealing. For example, the article may be a cup comprising a first substrate that forms the side of the cup and a second substrate that forms the base of the cup. The cup side and base may be connected by heat-sealing coatings on the two substrates, which may provide a barrier against liquid or moisture reaching the substrates, including along seams or junctures of the cup.

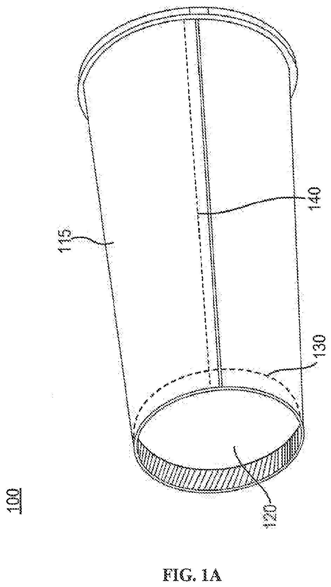

An exemplary article **100** in accordance with some aspects of the present disclosure, a cup suitable for containing a beverage, is shown in **FIGS. 1A-1C****.** **FIG. 1A** shows a perspective view of the outside of the cup **100** formed from two coated substrates - a coated bottom substrate **120** and a coated side substrate **115.** Both substrates may comprise paper, for example, with coatings on the inner and outer surfaces of the paper. The cup **100** has a first seam **130** where the coated bottom substrate **120** joins the coated side substrate **115,** and a second seam **140** where ends of the coated side substrate **115** are joined together.

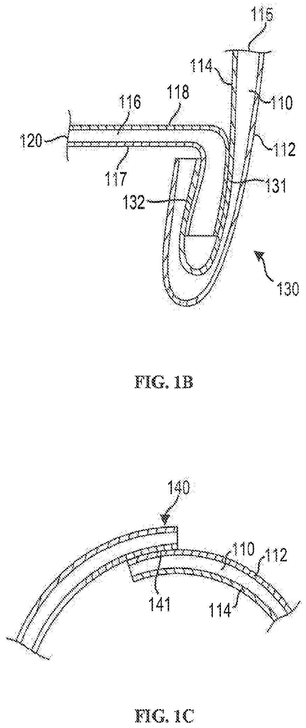

**FIG. 1B** shows cross-sectional view of the first seam **130** joining portions of the coated bottom substrate **120** and the coated side substrate **115.** As shown, the coated bottom substrate **120** of the cup **100** is formed by substrate **116** having first coating **117** that forms the outer surface of the coated bottom substrate **120,** and a second coating **118** that forms the inner surface of the coated bottom substrate **120** of the cup **100.** The coated side substrate **115** of the cup **100** is formed by substrate **110** having first coating **112** that forms the outer side surface of the coated side substrate **115** of cup **100,** and a second coating **114** that forms the inner side surface of the coated side substrate **115** of cup **100.** The various coatings **117, 118, 112, 114** may comprise the same or different materials as described herein. The coating **114** on the inner side surface of substrate **110** is heat sealed with 1) the coating **118** on the inner surface of the bottom substrate **116** at heat-sealing region **131** and 2) the coating **117** on the outer surface of the bottom substrate **116** at heat-sealing region **132.** **FIG. 1C** shows a cross-sectional view of the second seam **141** joining portions of the coated side substrate **115.** The coatings **114, 112** on inner and outer surfaces, respectively, of side substrate **110** are heat-sealed at ends of the side substrate **110.**

Heat-sealing may be performed by applying (e.g., at a pressure) heat on the coatings with one or more polymers, in which the temperature is at or above the melting point of the one or more polymers. In some examples, the heat-sealing may be performed by a heat sealer, e.g., a heat sealer on a papercup-making machine. The sealed articles may exhibit a desired seal strength, achieving proper fiber tear results.

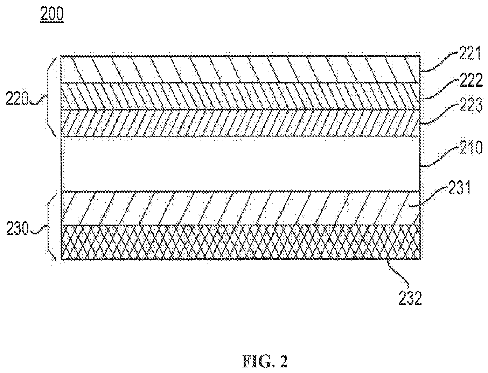

**FIG. 2** shows an exemplary configuration of coatings or coating system that may be used in an article such as cup **100,** according to some aspects of the present disclosure. Shown in cross-section in **FIG. 2****,** coating system **200** comprises a substrate **210** with two surfaces. The first surface is covered by coating **220.** Coating **220** comprises three layers (layers **221, 222,** and **223).** Layer **221,** for example, may be a heat-seal layer (e.g., comprising heat-sealable material(s)), layer **222** may be a water barrier layer (e.g., providing resistance to water and/or other aqueous materials or moisture optionally in combination with another layer or layers), and layer **223** may be a pre-coat layer as described herein. For example, layer **221** may comprise one or more heat-sealable polymers (with or without mineral(s)), layer **222** may comprise at least one polymer and at least one mineral, and layer **223** may comprise at least one polymer and/or polysaccharide material, optionally with one or more minerals.

Still referring to **FIG. 2****,** the second surface of the substrate **210** is covered by coating **230.** The coating **230** comprises two layers (layers **231** and **232).** Layer **231** may comprise a pre-coat layer, as described herein, and layer **232** may comprise a water barrier layer (e.g., providing a water/moisture resistance effect as discussed in connection to layer **222** above). For example, layer **231** may comprise at least one polymer and/or polysaccharide material, optionally with one or more minerals, and layer **232** may comprise one or more heat-sealable polymers (with or without mineral(s)). In cases where the substrate **210** is designed to be heat-sealed to itself, the outermost layers (layers **232** and **221)** can be heat-sealed together.

In at least one example, both heat-seal layers **221** and **232** may comprise the same heat-sealable polymer, e.g., ethylene acrylic acid, or a derivative thereof, optionally with one or more additives such as viscosity controlling agents, pH controlling agents, and/or bacteria controlling agents. Layers **232** and **221** may be configured to avoid blocking each other. For example, layer **221** may comprise ethylene acrylic acid without any mineral content, whereas layer **232** may comprise ethylene acrylic acid and a mineral, such as talc. For example, layer **232** may comprise about 65% (by weight) high aspect ratio talc and about 35% (by weight) of ethylene acrylic acid. Layer **222** also may also comprise a polymer and a mineral, and in some cases may have the same chemical composition as layer **232,** e.g., serving as water barrier layers. Each of the pre-coat layers **231** and **223** may comprise a polymer, such as styrene butadiene latex, or a polysaccharide, such as microfibrillated or nanofibrillated cellulose. The pre-coat layers **231, 223** may further comprise a mineral, e.g., kaolin. In at least one example, pre-coat layers may comprise about 50% (by weight) of kaolin, and about 50% (by weight) of styrene butadiene latex. It is understood that these materials and amounts of materials are exemplary only, and other combinations of materials and layers are encompassed by the disclosure herein.

The coating system example shown in **FIG. 2** may be useful for containing aqueous liquids or solids (e.g., water-containing solids, such as ice or ice cream) at various temperatures, including cold, room temperature, warm, and hot liquids. When used for containing cold liquids, the coating that forms the outermost surface of the container (e.g., coating **230)** may be useful for protecting against condensation.

While **FIGS. 1A-1C** and **2** illustrate examples of articles and coating systems, it is understood that the present disclosure includes additional articles and coating systems.

### EXAMPLES

Talc slurries were prepared by initially adding talc to an aqueous medium under high shear (about 2000 rpm) and continuing high shear dispersion at about 2500 rpm for 20 to 30 minutes. The aqueous medium comprised enough water to obtain a final solids content of about 48 wt%. The pH of the aqueous medium was adjusted to 9.5 using NaOH. The aqueous medium also comprised approximately 0.3% polyacrylate dispersant (dry dispersant based on the dry weight of talc). The final viscosity was approximately 60 mPa.s Brookfield 100 rpm Spindle 5. Coating compositions were prepared by mixing portions of the talc slurry with an aqueous dispersion of an ethylene acrylic acid polymer binder (Michelman MP4990R) to obtain compositions with different weight ratios of dry talc and polymer; 10:90, 30:70, 50:50, 70:30.

Test cup-stock boards (CTMP core with outer layers of chemical pulp) were prepared and evaluated for blocking and heat seal effectiveness, as described below. Five test cup-stock boards were prepared and evaluated for each of the blocking and heat seal results shown in Tables 3 and 4. The results in Tables 3 and 4 are the modal results from the five tests run for each.

The coating compositions were then used to coat a cup-stock board (CTMP core with outer layers of chemical pulp) which was pre-coated on each side at a coat weight of 6 - 8 gsm with a pre-coating composition comprising 15 pph styrene butadiene (SB) latex and kaolin having at least 75% of particles smaller than 2 µm and a shape factor of around 20. The coatings were applied using a wire wound bar (K Bar) selected to give a desired coatweight. The coating composition was placed in front of the bar on a non-absorbent substrate and the bar was drawn down the substrate, coating it evenly. Hot air was then applied to the surface to dry the coating. The coating weight (gsm) was determined by weighing a sample of the coated paper and comparing it to the weight of a sample of uncoated paper. Both coated and uncoated paper were conditioned at 23C and 50% R.H.

For both the heat sealing and blocking evaluation, a hot bar heat sealer HM-91 with an Arctics controller (advanced real time impulse control system) was employed. Both Jaws of the heat sealer were heated and solenoid operated to provide a constant force, jaws were covered with PTFE coated glass cloth, sealing width was 6mm.

Test samples consist of two pieces of coated board the coated sides (Piece A and Piece B) under evaluation (faces) which were brought together (face to face). Samples were not preheated, the sample is placed between the open jaws, jaws come together at a set temperature and for a set time, after the jaws open the samples are removed and samples are left to cool at room temperature for 30 minutes before the seal between the two coated boards is broken during the subsequent evaluation. Evaluation and ranking of the seal quality is carried out by observing the seal failure.

### Heat seal testing

The test samples were heat sealed at a temperature of 130C +/-1C for 0.2secs. The criteria for evaluation of the seal strength are shown below in Table 1.

This is an evaluation of seal quality with better seals achieving a higher value.

Modal results are shown in Table 3 below.

**TABLE 1**

| | |
|---|---|
| 0 | NO SEAL |
| 1 | WEAK ADHESION |
| 2 | ADHERED BUT NO TEAR |
| 3 | >1% FIBRE TEAR to <50% FIBRE TEAR |
| 4 | ≥50% FIBRE TEAR to <100%FIBRE TEAR |
| 5 | 100% FIBRE TEAR |

### Blocking Test

The test samples were subjected to a temperature of 50C +/- 3C for 25 secs. The criteria for evaluation of blocking are shown below in Table 2. This is an evaluation of blocking, under these conditions samples should not block/seal so poorer seals have higher values. Modal results are shown in Table 4 below.

**TABLE 2**

| | |
|---|---|
| 0 | ≥80% FIBRE TEAR |
| 1 | >1% to <80% FIBRE TEAR |
| 2 | STRONG ADHESION COATING PICK |
| 3 | MEDIUM ADHESION COATING PICK |
| 4 | WEAK ADHESION NO COATING PICK |
| 5 | NO OR VERY WEAK ADHESION |

**TABLE 3**

| Heat Seal Evaluation Modal Results | | | | | |
|---|---|---|---|---|---|
| | Piece A | | | | |
| | polymer : talc, wt ratio | | | | |
| | *@* Coat Weight of 10 - 12 gsm | | | | |
| Piece B | | 90 : 10 | 70 : 30 | 50 : 50 | 30 : 70 |
| Polymer : Talc wt ratio | 100 : 0 | | | | |
| @ Coat Weight of 10 - 12 gsm | | | | | |
| 100 : 0 | 5 | 5 | 5 | 5 | 5 |
| 90 : 10 | | | 5 | 5 | 5 |
| 70 : 30 | | | 5 | 5 | 2 |
| 50 : 50 | | | | 2 | 2 |
| 30 : 70 | | | | | 1 |

**TABLE 4**

| Blocking Evaluation Modal Results | | | | | |
|---|---|---|---|---|---|
| | Piece A | | | | |
| | polymer : talc, wt ratio | | | | |
| | *@* Coat Weight of 10 - 12 gsm | | | | |
| Piece B | 100: 0 | 90 : 10 | 70 : 30 | 50 : 50 | 30 : 70 |

| Polymer : Talc wt ratio | | | | | |
|---|---|---|---|---|---|
| @ Coat Weight of 10 - 12 gsm | | | | | |
| 100 : 0 | 0 | 0 | 0 | 0 | 0 |
| 90 : 10 | | 0 | 0 | 0 | 3 |
| 70 : 30 | | | 0 | 0 | 3 |
| 50 : 50 | | | | 0 | 3 |
| 30 : 70 | | | | | 5 |

The coated articles disclosed herein may include or be used for making a variety of products, e.g., products in which water resistance, heat resistance, grease resistance, and/or heat sealability are desired. Exemplary products include cups, plates, bowls, food containers such as food (e.g., sandwich) wraps, butcher wraps, gable top cartons, folding cartons, paper pouches, molded paper products, butter/margarine wraps, pet food boxes and sacks, multiwall paper sacks, lawn refuse bags, diapers, and composite materials.

## Claims

1. An article comprising:
at least one substrate having a first surface and a second surface;
a first coating covering the first surface of the at least one substrate, the first coating comprising:
at least one layer that comprises a first polymer that is water-dispersible and a mineral; and
at least one layer that comprises the first polymer without the mineral; and
a second coating covering the second surface of the at least one substrate, the second coating comprising a second polymer;
wherein at least one of the first polymer or the second polymer comprises a copolymer formed of at least two monomers, wherein the at least two monomers include ethylene and an unsaturated carboxylic acid monomer, and
wherein the first coating is capable of forming a heat-seal with the second coating, optionally wherein the first coating comprises from 10% to 80% of the first polymer, by weight of the first coating.

2. The article of claim 1, wherein the unsaturated carboxylic acid monomer is chosen from acrylic acid and methacrylic acid.

3. The article of any one of the preceding claims, wherein an outermost layer of one of the first coating or the second coating comprises a mineral, and an outermost layer of the other of the first coating or the second coating does not contain a mineral, and/or wherein the mineral comprises a phyllosilicate mineral.

4. The article of any one of the preceding claims, wherein the mineral comprises talc, kaolin, mica, or a combination thereof.

5. The article of any one of the preceding claims, wherein the at least one layer of the first coating that comprises the first polymer without the mineral is an outermost layer of the first coating.

6. The article of any one of the preceding claims, wherein at least one of the first coating or the second coating comprises at least one pre-coat layer comprising cellulose or a third polymer, optionally wherein the third polymer comprises a styrene-containing copolymer, or the third polymer is the same as at least one of the first polymer or the second polymer, and/or wherein the at least one pre-coat layer further comprises a mineral.

7. The article of any one of the preceding claims, wherein the second coating further comprises a mineral that is the same or different than the mineral of the first coating, and wherein a total amount of the mineral of the second coating is less than or equal to 80% of a total amount of the mineral of the first coating, wherein the mineral of the second coating may comprise a phyllosilicate mineral.

8. The article of any one of the preceding claims, wherein the first polymer is the same as the second polymer or a derivative thereof, and/or wherein the at least one substrate comprises paper.

9. The article of any one of the preceding claims, wherein (i) the article is a heat-sealed container, the first surface of the at least one substrate being an inner surface of the container, and the second surface of the at least one substrate being an outer surface of the container, or (ii) wherein the article is a heat-sealed container, the first surface of the at least one substrate being an outer surface of the container, and the second surface of the at least one substrate being an inner surface of the container, further wherein in (i) or (ii) the heat-sealed container may be configured to hold a liquid, a solid, or both a liquid and a solid at a temperature of less than 20°C.

10. A method for making an article, the method comprising:
forming a first coating on a first surface of a substrate by:
applying a first aqueous dispersion comprising a first polymer and a mineral; and
applying a second aqueous dispersion comprising the first polymer without the mineral; and
forming a second coating on a second surface of the substrate by applying an aqueous dispersion comprising a second polymer that is the same or different than the first polymer;
wherein the first coating is capable of forming a heat-seal with the second coating, and
wherein at least one of the first polymer or the second polymer comprises a copolymer formed of at least two monomers, wherein the at least two monomers include ethylene and an unsaturated carboxylic acid monomer.

11. The method of claim 10, wherein (i) forming the first coating comprises applying the first aqueous dispersion before applying the second aqueous dispersion, or (ii) forming the first coating further comprises:
before applying the first aqueous dispersion, applying a third aqueous dispersion comprising a third polymer different from the first polymer to form a pre-coat layer on the first surface.

12. The method of any one of claims 10-11, wherein forming the second coating further comprises:
applying an aqueous dispersion comprising a third polymer different from the second polymer to form a pre-coat layer on the second surface;
wherein the aqueous dispersion comprising the second polymer is applied to the pre-coat layer.

13. The method of claim 11 or 12, wherein the third polymer comprises a styrene-containing copolymer.

14. The method of any one of claims 10-13, wherein the first polymer comprises a copolymer of ethylene and an unsaturated carboxylic acid, and/or wherein the mineral comprises a phyllosilicate mineral, and/or wherein the mineral comprises talc, kaolin, mica, or a combination thereof, and/or further comprising heat-sealing a portion of the first coating to a portion of the second coating, and/or wherein the substrate comprises paper.

15. The article of any one of claims 1 to 9 wherein the article has a repulpability of at least 85%, measured according to the method in the description.

## Patentansprüche

1. Artikel umfassend:
mindestens ein Substrat, das eine erste Oberfläche und eine zweite Oberfläche aufweist;
eine erste Beschichtung, die die erste Oberfläche des mindestens einen Substrats bedeckt, wobei die erste Beschichtung Folgendes umfasst:
mindestens eine Schicht, die ein erstes Polymer umfasst, das in Wasser dispergierbar und ein Mineral ist; und
mindestens eine Schicht, die das erste Polymer ohne das Mineral umfasst; und
eine zweite Beschichtung, die die zweite Oberfläche des mindestens einen Substrats bedeckt, wobei die zweite Beschichtung ein zweites Polymer umfasst;
wobei mindestens eines von dem ersten Polymer oder dem zweiten Polymer ein Copolymer umfasst, das aus mindestens zwei Monomeren gebildet ist, wobei die mindestens zwei Monomere Ethylen und ein Monomer ungesättigter Carbonsäure umfassen und
wobei die erste Beschichtung in der Lage ist, eine Heißversiegelung mit der zweiten Beschichtung zu bilden, wobei wahlweise die erste Beschichtung 10 % bis 80 % des ersten Polymers, auf das Gewicht der ersten Beschichtung bezogen, umfasst.

2. Artikel nach Anspruch 1, wobei das Monomer ungesättigter Carbonsäure unter Acrylsäure und Methacrylsäure ausgewählt wird.

3. Artikel nach einem der vorhergehenden Ansprüche, wobei eine äußerste Schicht von einer von der ersten Beschichtung oder der zweiten Beschichtung ein Mineral umfasst und eine äußerste Schicht von der anderen von der ersten Beschichtung oder der zweiten Beschichtung kein Mineral enthält und/oder wobei das Mineral ein Phyllosilicatmineral umfasst.

4. Artikel nach einem der vorhergehenden Ansprüche, wobei das Mineral Talkum, Kaolin, Glimmer oder eine Kombination davon umfasst .

5. Artikel nach einem der vorhergehenden Ansprüche, wobei die mindestens eine Schicht von der ersten Beschichtung, die das erste Polymer ohne das Mineral umfasst, eine äußerste Schicht von der ersten Beschichtung ist.

6. Artikel nach einem der vorhergehenden Ansprüche, wobei mindestens eine von der ersten Beschichtung oder der zweiten Beschichtung mindestens eine Vorbelagsschicht umfasst, die Cellulose oder ein drittes Polymer umfasst, wobei wahlweise das dritte Polymer ein Styrol enthaltendes Copolymer umfasst oder das dritte Polymer dasselbe ist wie mindestens eines vor dem ersten Polymer oder dem zweiten Polymer und/oder wobei die mindestens eine Vorbelagsschicht ferner ein Mineral umfasst.

7. Artikel nach einem der vorhergehenden Ansprüche, wobei die zweite Beschichtung ferner einen Mineral umfasst, das dasselbe wie oder verschieden von dem Mineral der ersten Beschichtung ist und wobei eine Gesamtmenge des Minerals von der zweiten Beschichtung geringer als oder gleich 80 % einer Gesamtmenge des Minerals der erste Beschichtung ist, wobei das Mineral der zweiten Beschichtung ein Phyllosilicatmineral umfassen kann.

8. Artikel nach einem der vorhergehenden Ansprüche, wobei das erste Polymer dasselbe wie das zweite Polymer oder ein Derivat davon ist und/oder wobei das mindestens eine Substrat Papier umfasst.

9. Artikel nach einem der vorhergehenden Ansprüche, wobei (i) der Artikel ein heißversiegelter Behälter ist, wobei die erste Oberfläche des mindestens einen Substrats eine Innenfläche des Behälters ist und die zweite Oberfläche des mindestens einen Substrats eine Außenfläche des Behälters ist oder (ii) wobei der Artikel ein heißversiegelter Behälter ist, wobei die erste Oberfläche des mindestens einen Substrats eine Außenfläche des Behälters ist und die zweite Oberfläche des mindestens einen Substrats eine Innenfläche des Behälters ist, wobei ferner in (i) oder (ii) der heißversiegelte Behälter konfiguriert sein kann, eine Flüssigkeit, einen Feststoff oder sowohl eine Flüssigkeit als auch einen Feststoff bei einer Temperatur von weniger als 20 °C zu halten.

10. Verfahren zum Herstellen eines Artikels, wobei das Verfahren Folgendes umfasst:
Bilden einer ersten Beschichtung auf einer ersten Oberfläche eines Substrats durch:
Aufbringen einer ersten wässrigen Dispersion, die ein erstes Polymer und ein Mineral umfasst; und
Aufbringen einer zweiten wässrigen Dispersion, die ein erstes Polymer ohne das Mineral umfasst; und
Bilden einer zweiten Beschichtung auf einer zweiten Oberfläche des Substrats durch Aufbringen einer wässrigen Dispersion, die ein zweites Polymer umfasst, das dasselbe oder verschieden von dem ersten Polymer ist;
wobei die erste Beschichtung in der Lage ist, eine Heißversiegelung mit der zweiten Beschichtung zu bilden und
wobei mindestens eines von dem ersten Polymer oder dem zweiten Polymer ein Copolymer umfasst, das aus mindestens zwei Monomeren gebildet ist, wobei die mindestens zwei Monomere Ethylen und ein Monomer ungesättigter Carbonsäure umfassen.

11. Verfahren nach Anspruch 10, wobei (i) Bilden der ersten Beschichtung Aufbringen der ersten wässrigen Dispersion vor Aufbringen der zweiten wässrigen Dispersion umfasst oder (ii) Bilden der ersten Beschichtung ferner Folgendes umfasst:
vor Aufbringen der ersten wässrigen Dispersion Aufbringen einer dritten wässrigen Dispersion, die ein drittes Polymer umfasst, das von dem ersten Polymer verschieden ist, um eine Vorbelagsschicht auf der ersten Oberfläche zu bilden.

12. Verfahren nach einem der Ansprüche 10-11, wobei Bilden der zweiten Beschichtung ferner Folgendes umfasst:
Aufbringen einer wässrigen Dispersion, die ein drittes Polymer umfasst, das von dem zweiten Polymer verschieden ist, um eine Vorbelagsschicht auf der zweiten Oberfläche zu bilden;
wobei die wässrige Dispersion, die das zweite Polymer umfasst, auf die Vorbelagsschicht aufgebracht wird.

13. Verfahren nach Anspruch 11 oder 12, wobei das dritte Polymer ein Styrol enthaltendes Copolymer umfasst.

14. Verfahren nach einem der Ansprüche 10-13, wobei das erste Polymer ein Copolymer von Ethylen und einer ungesättigten Carbonsäure umfasst und/oder wobei das Mineral ein Phyllosilicatmineral umfasst und/oder wobei das Mineral Talkum, Kaolin, Glimmer oder eine Kombination davon umfasst und/oder ferner Wärmeversiegeln eines Teils der ersten Beschichtung an einen Teil der zweiten Beschichtung umfassend und/oder wobei das Substrat Papier umfasst.

15. Artikel nach einem der Ansprüche 1 bis 9, wobei der Artikel eine Fähigkeit, zu Brei verarbeitet zu werden, von mindestens 85 %, dem Verfahren der Beschreibung entsprechend gemessen, aufweist.

## Revendications

1. Article comprenant :
au moins un substrat ayant une première surface et une deuxième surface ;
un premier revêtement recouvrant la première surface de l'au moins un substrat, le premier revêtement comprenant :
au moins une couche qui comprend un premier polymère qui est dispersible dans l'eau et un minéral ; et
au moins une couche qui comprend le premier polymère sans le minéral ; et
un deuxième revêtement recouvrant la deuxième surface de l'au moins un substrat, le deuxième revêtement comprenant un deuxième polymère ;
dans lequel au moins l'un du premier polymère ou du deuxième polymère comprend un copolymère formé d'au moins deux monomères, dans lequel les au moins deux monomères comprennent de l'éthylène et un monomère d'acide carboxylique insaturé, et
dans lequel le premier revêtement est capable de former un thermoscellage avec le deuxième revêtement, éventuellement dans lequel le premier revêtement comprend entre 10 % et 80 % du premier polymère en poids du premier revêtement.

2. Article selon la revendication 1, dans lequel le monomère d'acide carboxylique insaturé est choisi parmi l'acide acrylique et l'acide méthacrylique.

3. Article selon l'une quelconque des revendications précédentes, dans lequel une couche la plus externe de l'un du premier revêtement ou du deuxième revêtement comprend un minéral, et une couche la plus externe de l'autre du premier revêtement ou du deuxième revêtement ne contient pas de minéral, et/ou dans lequel le minéral comprend un minéral à base de phyllosilicate.

4. Article selon l'une quelconque des revendications précédentes, dans lequel le minéral comprend du talc, du kaolin, du mica ou une combinaison de ceux-ci.

5. Article selon l'une quelconque des revendications précédentes, dans lequel la au moins une couche du premier revêtement qui comprend le premier polymère sans le minéral est une couche la plus externe du premier revêtement.

6. Article selon l'une quelconque des revendications précédentes, dans lequel au moins l'un du premier revêtement ou du deuxième revêtement comprend au moins une couche de pré-revêtement comprenant de la cellulose ou un troisième polymère, éventuellement dans lequel le troisième polymère comprend un copolymère contenant du styrène, ou le troisième polymère est le même que l'un au moins du premier polymère ou du deuxième polymère, et/ou dans lequel la au moins une couche de pré-revêtement comprend en outre un minéral.

7. Article selon l'une quelconque des revendications précédentes, dans lequel le deuxième revêtement comprend en outre un minéral qui est identique ou différent du minéral du premier revêtement, et dans lequel une quantité totale du minéral du deuxième revêtement est inférieure ou égale à 80 % d'une quantité totale du minéral du premier revêtement, dans lequel le minéral du deuxième revêtement peut comprendre un minéral à base de phyllosilicate.

8. Article selon l'une quelconque des revendications précédentes, dans lequel le premier polymère est identique au deuxième polymère ou à un dérivé de celui-ci, et/ou dans lequel le au moins un substrat comprend du papier.

9. Article selon l'une quelconque des revendications précédentes, dans lequel (i) l'article est un récipient thermoscellé, la première surface de l'au moins un substrat étant une surface intérieure du récipient, et la deuxième surface de l'au moins un substrat étant une surface extérieure du récipient, ou (ii) dans lequel l'article est un récipient thermoscellé, la première surface de l'au moins un substrat étant une surface extérieure du récipient, et la deuxième surface de l'au moins un substrat étant une surface intérieure du récipient, en outre dans lequel dans (i) ou (ii) le récipient thermoscellé peut être configuré pour contenir un liquide, un solide, ou à la fois un liquide et un solide à une température inférieure à 20 °C.

10. Procédé de fabrication d'un article, le procédé comprenant :
la formation d'un premier revêtement sur une première surface d'un substrat par :
l'application d'une première dispersion aqueuse comprenant un premier polymère et un minéral ; et
l'application d'une deuxième dispersion aqueuse comprenant le premier polymère sans le minéral ; et
la formation d'un deuxième revêtement sur une deuxième surface du substrat par l'application d'une dispersion aqueuse comprenant un deuxième polymère qui est identique ou différent du premier polymère ;
dans lequel le premier revêtement est capable de former un thermoscellage avec le deuxième revêtement, et
dans lequel au moins l'un du premier polymère ou du deuxième polymère comprend un copolymère formé d'au moins deux monomères, dans lequel les au moins deux monomères comprennent de l'éthylène et un monomère d'acide carboxylique insaturé.

11. Procédé selon la revendication 10, dans lequel (i) la formation du premier revêtement comprend l'application de la première dispersion aqueuse avant l'application de la deuxième dispersion aqueuse, ou (ii) la formation du premier revêtement comprend en outre :
avant l'application de la première dispersion aqueuse, l'application d'une troisième dispersion aqueuse comprenant un troisième polymère différent du premier polymère pour former une couche de pré-revêtement sur la première surface.

12. Procédé selon l'une quelconque des revendications 10 à 11, dans lequel la formation du deuxième revêtement comprend en outre :
l'application d'une dispersion aqueuse comprenant un troisième polymère différent du deuxième polymère pour former une couche de pré-revêtement sur la deuxième surface ;
dans lequel la dispersion aqueuse comprenant le deuxième polymère est appliquée sur la couche de pré-revêtement.

13. Procédé selon la revendication 11 ou la revendication 12, dans lequel le troisième polymère comprend un copolymère contenant du styrène.

14. Procédé selon l'une quelconque des revendications 10 à 13, dans lequel le premier polymère comprend un copolymère d'éthylène et d'un acide carboxylique insaturé, et/ou dans lequel le minéral comprend un minéral à base de phyllosilicate, et/ou dans lequel le minéral comprend du talc, du kaolin, du mica ou une combinaison de ceux-ci, et/ou comprenant en outre le thermosoudage d'une partie du premier revêtement sur une partie du deuxième revêtement, et/ou dans lequel le substrat comprend du papier.

15. Article selon l'une quelconque des revendications 1 à 9, dans lequel l'article a une repulpabilité d'au moins 85 %, mesurée selon le procédé décrit dans la description.
